(19) **Europäisches Patentamt**

**European Patent Office**

**Office européen des brevets**

(11) **EP 0 826 137 B1**

(12) **EUROPÄISCHE PATENTSCHRIFT**

(45) Veröffentlichungstag und Bekanntmachung des Hinweises auf die Patenterteilung:
**11.04.2001 Patentblatt 2001/15**

(21) Anmeldenummer: **97904399.9**

(22) Anmeldetag: **10.02.1997**

(51) Int Cl.$^7$: **G01C 17/38**

(86) Internationale Anmeldenummer:
**PCT/EP97/00583**

(87) Internationale Veröffentlichungsnummer:
**WO 97/34125 (18.09.1997 Gazette 1997/40)**

(54) **VERFAHREN ZUR BESTIMMUNG DER RICHTUNG DES ERDMAGNETFELDES**

PROCESS FOR DETERMINING THE DIRECTION OF THE EARTH'S MAGNETIC FIELD

PROCEDE DE DETERMINATION DE LA DIRECTION DU CHAMP MAGNETIQUE TERRESTRE

(84) Benannte Vertragsstaaten:
**AT CH DE FI FR GB IT LI NL SE**

(30) Priorität: **13.03.1996 DE 19609762**

(43) Veröffentlichungstag der Anmeldung:
**04.03.1998 Patentblatt 1998/10**

(73) Patentinhaber: **Leica Geosystems AG**
**9435 Heerbrugg (CH)**

(72) Erfinder:
- **GNEPF, Silvio**
  **CH-9435 Heerbrugg (CH)**
- **WEILENMANN, Jürg**
  **CH-9443 Widnau (CH)**

(74) Vertreter: **Stamer, Harald, Dipl,-Phys.**
**Postfach 26 04**
**35536 Wetzlar (DE)**

(56) Entgegenhaltungen:
**US-A- 4 539 760        US-A- 4 686 772**

## Beschreibung

Die Erfindung betrifft ein Verfahren zur Bestimmung der Richtung des Erdmagnetfeldes, das durch gerätefeste magnetische Materialien und Magnetfelder elektrischer Ströme gestört sein kann, mittels eines elektronischen Magnetkompasses, der drei Magnetfeldsensoren und zwei Neigungserfassungseinrichtungen enthält.

Aus US 4 686 772 ist ein elektronischer Magnetkompaß bekannt, mit dem z. B. die Fahrtrichtung eines Panzers bestimmt werden soll. Der Panzer weist zwei Eisenkörper auf, nämlich den Turm und den Fahrzeugkörper, die relativ zueinander um eine vertikale Achse drehbar sind. Der Magnetkompaß ist im Fahrzeugkörper angeordnet und umfaßt ein pendelfreies dreiachsiges Magnetometer, das elektrische Magnetfeldsignale ausgibt, die die drei Magnetfeldkomponenten an dem Ort des Magnetometers darstellen. Es sind zwei Neigungssensoren vorgesehen, die elektrische Signale ausgeben, die den Nickwinkel und den Rollwinkel des Fahrzeugkörpers darstellen, an dem die Neigungssensoren angebracht sind. Ferner gibt eine Winkelmeßeinrichtung ein Drehwinkelsignal für den Winkel zwischen den zwei Eisenkörpern an. In einem Speicher werden mehrere vorkalibrierte Korrekturfaktoren abgespeichert, die die Wirkung des vom Fahrzeug induzierten Magnetfeldes auf die Messungen des Magnetometers für eine Mehrzahl von Drehwinkeln zwischen den beiden Eisenkörpem korrigieren sollen. Mit Hilfe eine Computers wird in Realzeit die Fahrtrichtung des Panzers aus den elektrischen Magnetfeldsignalen und den Signalen der Neigungssensoren berechnet, die durch die gespeicherten Korrekturfaktoren für die entsprechenden Drehwinkel korrigiert worden sind.

Bevor der beschriebene Magnetkompaß verwendet werden kann, ist es notwendig, Kalibriermessungen durchzuführen. Hierfür wird das Fahrzeug auf mindestens zwei verschiedenen, zueinander nicht parallelen Ebenen angeordnet. In diesen Lagen werden bei unterschiedlichen Ausrichtungen des Fahrzeugkörpers aber gleicher relativer Ausrichtung des Panzerturms Messungen des Azimutwinkels, des Nickwinkels und des Rollwinkels vorgenommen. Um die letztgenannten Winkel messen zu können, ist beispielsweise ein Theodolit notwendig. Bei der Kalibrierung wird vorausgesetzt, daß das Erdmagnetfeld am Meßort bekannt ist. Hierfür werden aus Kartenmaterial die Werte der magnetischen Inklination und Deklination des Erdmagnetfeldes für den jeweiligen Meßort entnommen.

In der US 4 539 760 ist ein elektronischer Magnetkompaß für Fahrzeuge beschrieben, der drei Magnetsensoren aufweist. Diese sprechen auf die drei orthogonalen Komponenten eines Magnetfeldes an, das das Erdmagnetfeld und ein zusätzliches, mit dem Fahrzeug verbundenes Störfeld einschließt. Die Magnetsensoren erzeugen elektrische, den Komponenten entsprechende Signale. Ferner sprechen Neigungssensoren auf die Neigung des Fahrzeugs in bezug auf die horizontale Ebene an. Mittels einer Datenverarbeitungseinrichtung und eines Speichers werden Signale gespeichert, die als Kalibrierkorrekturwerte von den Meßsensoren abgeleitet werden, wenn das Fahrzeug über einen Kreis zum Kalibrieren des Magnetkompasses gedreht wird. Um den Einfluß des magnetischen Störfeldes auszuschließen, berechnet die Datenverarbeitungseinrichtung nach Abschluß des Kalibriervorgangs unter Berücksichtigung der Kalibrierkorrekturwerte korrigierte Werte für das Erdmagnetfeld am Ort des Fahrzeugs. Dann wird ausgehend von diesen korrigierten Werten unter Verwendung der Werte der Neigungssensoren, die der Bestimmung des Horizontes dienen, der Azimut der Fahrzeugfahrtrichtung berechnet. Bei den Berechnungen wird davon ausgegangen, daß die Korrekturmatrix symmetrisch ist. Dies trifft, wenn überhaupt, nur in den seltensten Fällen zu.

Aufgabe der Erfindung ist es, ein Verfahren zur Bestimmung der Richtung des Erdmagnetfeldes mittels eines elektronischen Magnetkompasses anzugeben, das weniger aufwendig durchgeführt werden kann.

Erfindungsgemäß wird diese Aufgabe durch die Merkmale des Anspruches 1 gelöst.

Vorteilhafte Weiterbildungen des Erfindungsgegenstandes sind in den Unteransprüchen angegeben.

In vorteilhafter Weise verlangt das Verfahren nach der Erfindung keine spezifischen Kalibriermessungen mit zusätzlichen Meßgeräten. Auch die Eingabe von besonderen Daten entfällt bei dem elektronischen Magnetkompaß, um ihn für seine Verwendung vorzubereiten. Es ist lediglich erforderlich, den Magnetkompaß in verschiedenen, beliebigen Raumlagen anzuordnen. In jeder Raumlage werden bevorzugt drei Magnetfeldkomponenten bestimmt. Diese Magnetfeldkomponenten können zueinander orthogonal sein, wenn es erwünscht ist, müssen es aber nicht sein. Mit Hilfe der zusätzlich in jeder Raumlage gemessenen Neigungsgrößen, d.h. des Nickwinkels und des Rollwinkels, läßt sich aus den jeweiligen Magnetfeldkomponenten die Richtung des tatsächlichen Magnetfeldvektors des Erdfeldes bestimmen.

Das erfindungsgemäße Verfahren verlangt nicht, daß der elektronische Magnetkompaß vor seinem Einbau kalibriert sein muß. Mit dem Verfahren nach der Erfindung werden nicht nur magnetische Störfelder sondern auch Herstellungstoleranzen, unterschiedliche Empfindlichkeiten der Sensoren usw. berücksichtigt. Mithin ist es nicht notwendig, einen bereits vom Hersteller kalibrierten Magnetkompaß zu verwenden.

Bei dem erfindungsgemäßen Verfahren wird die Tatsache verwendet, daß der Inklinationswinkel zwischen dem Gravitationsvektor und dem Erdmagnetfeldvektor an dem jeweiligen festen Ort unabhängig von der momentanen Lage des Systems konstant bleibt.

Es sind Figuren zur Erleichterung des Verständnisses der Erfindung angegeben, von denen

Fig 1.     schematisch eine Anordnung von elektronischem Magnetkompaß und weich- und hartmagnetischem Störfelderzeugem zeigt, und

Fig. 2    die für die Messung des Erdmagnetfeldes relevanten Vektoren darstellt.

Poisson hatte sich bereits im 19. Jahrhundert mit dem Problem auseinandergesetzt, wie sich das tatsächlich vorhandene Magnetfeld bestimmen läßt, wenn ein Magnetometer in einem System angebracht ist, das selbst magnetische Komponenten aufweist. Die diese Situation beschreibende Poisson'sche Formel sagt aus, daß in einem solchen Fall das gemessene magnetische Feld eine lineare Funktion des tatsächlich vorhandenen Feldes ist, es sich also um eine affine Abbildung handelt. In diesem Zusammenhang wird auf die bereits genannte US 4 686 772, Spalte 2, Zeilen 26 bis 30 verwiesen.

Für den allgemeinen Fall läßt sich sagen, daß sich das gemessene Magnetfeld aus dem weichmagnetisch verzerrten Erdmagnetfeld am Meßort und aus einer hartmagnetischen Komponente zusammensetzt. Bei dem weichmagnetisch verzerrten Erdmagnetfeld handelt es sich um einen durch das Erdmagnetfeld induzierten Magnetismus. Die hartmagnetische Komponente umfaßt beispielsweise durch Permanentmagnete oder elektrische Ströme in dem System erzeugte, am Ort des Magnetometers konstante Magnetfelder. Die hartmagnetische Komponente ist durch eine Veränderung des äußeren Feldes nicht beeinflußbar.

Mathematisch läßt sich die genannte Poisson'sche Formel etwas abgeändert darstellen als:

$$\mathbf{b}_{gem} = \mathbf{M}\,\mathbf{b}_E + \mathbf{b}_0 = \mathbf{b}_E + \triangle\mathbf{M}\,\mathbf{b}_E + \mathbf{b}_0 \tag{1}$$

mit:

$\mathbf{b}_{gem}$ =    gemessener Magnetfeldvektor
$\mathbf{b}_E$ =    tatsächlicher Erdmagnetfeldvektor am Meßort
$\triangle\mathbf{M}$ =    weichmagnetische Feldverzerrung, d.h. durch das Erdmagnetfeld induzierter Magnetismus, wobei
$\mathbf{M}$    $= \mathbf{I} + \triangle\mathbf{M}$ ; $\mathbf{I}$ = Einheitsmatrix
$\mathbf{b}_0$ =    hartmagnetische Komponenten

Bei den vorstehenden Angaben sowie in den nachfolgenden Darlegungen sind Vektoren und Matrizen mit Fettdruck wiedergegeben. Die Vektoren werden üblicherweise auf ein kartesisches Koordinatensystem bezogen. Bei den Matrizen handelt es sich allgemein um 3 x 3-Matrizen.

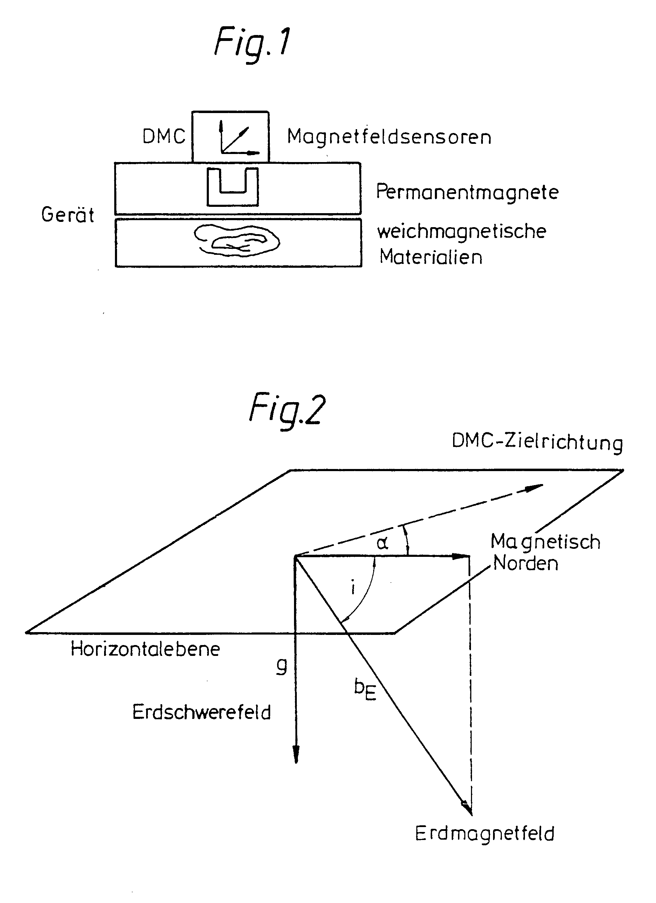

In Fig. 1 ist schematisch dargestellt, daß der Magnetkompaß DMC in einem Gerät angeordnet ist, in dem Permanentmagnete als hartmagnetische Störer und weichmagnetische Materialien zusammenwirken und den Meßwert des DMC beeinflussen. In Fig. 2 sind die für die Messung des Erdmagnetfeldes relevanten Vektoren und die relevanten Projektionen in die Horizontalebene dargestellt. Bei fest in einem Fahrzeug angeordnetem Magnetkompaß entspricht die Zielrichtung der Fahrtrichtung.

Der elektronische Magnetkompaß weist drei Magnetfeldsensoren und zwei Neigungssensoren auf, wobei erstere drei Magnetfeldkomponenten bestimmen, die nicht notwendigerweise zueinander orthogonal sein müssen.

Die Permanentmagnete und die elektrischen Ströme erzeugen ein am Ort der Magnetfeldsensoren festes Feld, das sich als Nullpunktverschiebung des durch die Magnetfeldkomponenten gebildeten Koordinatensystems äußert.

Die weichmagnetischen Materialien erzeugen aus einem vorhandenen Feld ein abgeschwächtes oder verstärktes Feld in Feldrichtung und zusätzlich Feldkomponenten in den dazu senkrechten Richtungen. Dies kann als ein "Übersprechen" der Feldrichtungen x, y und z angesehen werden.

Dieselben obigen Gleichungen ergeben sich auch, wenn man ein Magnetometer betrachtet, das drei nicht orthogonale Magnetfeldsensoren unterschiedlicher Empfindlichkeit und eine Nullpunktverschiebung besitzt, wie beispielsweise ein "rohes" Magnetometer ohne Kalibrierung vom Hersteller.

Die Messung des Magnetfeldes mit einem solchen "rohen" Magnetometer läßt sich mathematisch auf die folgende Weise ausdrücken:

$$b_{gem,i} = f_i\,e_i\,b_{Ei} + o_i \; ; \; i = x, y, z$$

mit $f_i$ der Verstärkung, $e_i$ der Meßrichtung, d.h. dem Einheitsvektor, und $o_i$ dem Offset des i-ten Sensors.

Schreibt man $f_i\,e_i = (M_{i1}, M_{i2}, M_{i3})$ und $\mathbf{o}_i = \mathbf{b}_{oi}$, so erhält man wieder die obige Gleichung (1).

Um die Größe des tatsächlichen Erdmagnetfeldes zu bestimmen, ist es notwendig, die oben angegebene vektorielle Gleichung (1) nach $b_E$ aufzulösen. Man erhält durch Inversion und Subtraktion:

$$b_E = M^{-1} (b_{gem} - b_0) = m (b_{gem} - b_0) \qquad (2)$$

mit $\mathbf{m} = \mathbf{M}^{-1}$

Um die unbekannten Größen $\mathbf{M}$ bzw. $\mathbf{m} = \mathbf{M}^{-1}$ und $b_0$ aus der Gleichung (1) oder (2) zu bestimmen, kann man einen Lösungsweg einschlagen, wie er aus der bereits genannten US 4 686 772 bekannt ist. Dort wird davon ausgegangen, daß zu dem gemessenen Magnetfeldvektor $\mathbf{b}_{gem}$ jedesmal auch noch der Erdmagnetfeldvektor $b_E$ explizit bekannt ist. Die vektoriellen Gleichungen (1) und (2) stellen jeweils ein lineares Gleichungssystem für die Unbekannten $M_{ij}$ bzw. $m_{ij}$ und $b_{0i}$ dar. Durch Messungen in mindestens vier geometrisch verschiedenen Stellungen ergeben sich bei bekanntem Erdmagnetfeld die $M_{ij}$ und $b_{0i}$ unmittelbar mit Hilfe von elementaren Methoden zur Auflösung linearer Gleichungssysteme.

Bei dem in der obengenannten US 4 539 760 angegebenen Lösung, wird von der Tatsache ausgegangen, daß der Betrag des Erdmagnetfeldes von der Stellung des Magnetometers unabhängig ist. Wenn die Größen $m_{ij}$ und $b_0$ richtig bestimmt worden sind, dann ergibt sich ein Erdmagnetfeldvektor $b_E$, der in jeder Lage des Magnetometers die gleiche Länge aufweist. Damit folgt:

$$\text{const} = b_E{}^2 = b_E{}^T b_E = (b_{gem} - b_0)^T m^T m (b_{gem} - b_0)$$

$$= (b_{gem} - b_0)^T U (b_{gem} - b_0) \qquad (3)$$

Mit $\mathbf{U}^T = \mathbf{U}$ , was bedeutet, daß $\mathbf{U}$ eine symmetrische Matrix ist.

Es ist unmittelbar zu erkennen, daß sich mit dieser Gleichung (3) nur das Produkt $\mathbf{U} = \mathbf{m}^T\mathbf{m}$ der gesuchten Matrix $\mathbf{m}$ berechnen läßt. Nur wenn angenommen wird, daß diese Matrix symmetrisch ist, und wenn vorausgesetzt wird, daß die Diagonale positiv ist, dann lassen sich die Elemente dieser Matrix berechnen. Die erstgenannte Annahme trifft aber nur in den seltensten Fällen zu, denn sie würde eine weichmagnetische Symmetrie bedeuten, die bei einem technischen Gerät, wie beispielsweise einem Flugzeug oder Kraftfahrzeug, nur äußerst unwahrscheinlich gegeben ist.

Gemäß der Erfindung wird nun, um die Größe $b_E$ zu bestimmen, d.h. die Vektorgleichung zu lösen, von einem Ansatz ausgegangen, bei dem die Tatsache ausgenutzt wird, daß in jeder Lage des Meßsystems am gleichen geographischen Ort der Winkel zwischen der Horizontalebene und dem Erdmagnetfeld, d.h. der Inklinationswinkel, konstant bleibt. Dies gilt offensichtlich dann auch für den Winkel zwischen der Richtung des Gravitationsvektors $\mathbf{g}$ und dem Erdmagnetfeldvektor $\mathbf{b}_E$. Somit läßt sich schreiben:

$$\text{const} = b_g = b_E \sin(i) = g^T b_E = g^T m (b_{gem} - b_0) \qquad (4)$$

mit

$b_g$ =    Magnetfeldkomponente parallel zum Gravitationsvektor $\mathbf{g}$
$b_E$ =    Länge des Magnetfeldvektors $\mathbf{b}_E$

worin i der Inklinationswinkel ist.

Diese Gleichung besagt, daß die Komponente des Magnetfeldvektors in Richtung des Erdschwerefeldes, also senkrecht zur Horizontalebene, in allen Systemlagen dieselbe bleibt.

In dieser Gleichung kommt die Größe m linear und nicht als Produkt vor. Der Gravitationsvektor $\mathbf{g}$ kann mit Hilfe der Neigungssensoren bestimmt werden.

Deshalb kann diese Größe $\mathbf{m}$ unmittelbar berechnet werden, ohne eine Vermessung des Feldes durchführen zu müssen, wie bei der genannten

US 4 686 772, oder besondere Symmetriebedingungen voraussetzen zu müssen, wie bei der erwähnten US 4 539 760.

Die Anzahl der zu bestimmenden Parameter beträgt:

$\mathbf{m}$=3x3=9
$\mathbf{b}_0$=3
$\mathbf{b}_g$ = 1.

Damit ergeben sich insgesamt 9 + 3 + 1 = 13 Parameter, für deren Bestimmung mindestens 13 Gleichungen benötigt werden.

Ein beliebiger Maßstabsfaktor kann noch gewählt werden, wie es beispielsweise aus der erwähnten US 4 539 760 (Spalte 4, Zeile 3 ff.) bekannt ist. Mögliche Maßstabsfestlegungen wären beispielsweise eine aus der folgenden Auflistung:

$$b_g = \text{const.}$$
$$m_{11} = \text{const.}$$
$$m_{11} + m_{22} + m_{33} = \text{const.}$$
$$m_{11}^2 + m_{22}^2 + m_{33}^2 = \text{const.}$$
$$m_{11}^2 + m_{12}^2 + ... + m_{33}^2 = \text{const.}$$
$$\det \mathbf{m} = \text{const.}$$

oder eine andere geeignete, wobei die Konstante auch zu 1 gewählt werden kann. Durch die Maßstabsfestlegung wird die Anzahl der Parameter um 1 verringert, so daß nunmehr noch 12 Parameter übrig bleiben, für die eine entsprechende Anzahl von Gleichungen benötigt wird. Bei der anfänglichen Kalibrierung des Magnetkompasses werden dazu 12 verschiedene geometrische Stellungen j = 1, ..., 12 eingenommen, in denen die drei Magnetfeldkomponenten und die beiden Neigungswinkel gemessen werden.

Man erhält ein lineares Gleichungssystem:

$$b_g = g_j^T m (b_{gem,j} - b_0) = g_j^T m\, b_{gem,j} - g_j^T u_0 \tag{5}$$

mit $\mathbf{u}_0 = \mathbf{m}\, \mathbf{b}_0$ und beispielsweise $b_g = 1$, wobei sich dann explizit ergibt:

$$1 = g_{j1}\, b_{gem,1}\, m_{11} + g_{j1}\, b_{gem,2}\, m_{12} + ... \,...\, +$$

$$g_{j1}\, u_{01} + g_{j2}\, u_{02} + g_{j3}\, u_{03}$$

Wenn mehr als 12 Gleichungen zur Verfügung stehen, kann hier z. B. die beste Anpassung mit dem Verfahren der kleinsten quadratischen Abweichung bestimmt werden, das allgemein bekannt ist.

Im Rahmen der Erfindung ist auch die Möglichkeit vorgesehen, die Tatsache der Konstanz des Inklinationswinkels bzw. $b_g$ an demselben festen Ort mit derjenigen der vorhandenen Konstanz der Länge des Magnetfeldvektors ($\mathbf{b}_E = |\mathbf{b}_E|$) auszunutzen. Anders ausgedrückt bedeutet dies, daß nicht nur die obige Gleichung (5) sondern auch die Gleichung (3) für das Verfahren verwendet werden kann. Dann muß zusätzlich noch der Parameter $b_E$ bestimmt werden, so daß sich die Anzahl N der Parameter und damit der notwendigen Messungen um 1 auf N = 13 erhöht.

In vorteilhafter Weise erhält man durch die Verwendung der Gleichungen (3) und (5) eine bessere Ausnutzung der zur Verfügung stehenden Daten, da jede Messung in zwei Gleichungen verwendet wird. Die Anzahl der notwendigen Messungen halbiert sich daher. Zur Durchführung dieses Verfahrens wird eine statistische Ausgleichsrechnung verlangt, der beispielsweise das Verfahren der kleinsten quadratischen Abweichungen zugrunde liegen kann.

In dem nachfolgend beschriebenen Verfahren werden die oben genannten Gleichungen (3) und (5) auf statistisch korrekte Weise verwendet.

Im folgenden wird der Zusammenhang, der zwischen den Magnetfeldsensorsignalen $\mu_{ij}$; i = 1, 2, 3 und dem Erdmagnetfeldvektor $\mathbf{b}_{Ej}$ besteht, näher erläutert. Dieser läßt sich darstellen durch die Gleichung

$$\mu_j = \mu_0 + M b_{Ej} + \varepsilon_j \; ; \; j = 1,...N \text{ (Meßstellungen)}$$

$$\mu_j = \begin{pmatrix} \mu_{1j} \\ \mu_{2j} \\ \mu_{3j} \end{pmatrix}$$

Meßwerte der 3 Magnetfeldsensoren in der Stellung j

$$\mu_0 = \begin{pmatrix} \mu_{01} \\ \mu_{02} \\ \mu_{03} \end{pmatrix}$$

Vektor für Offset und hartmagnetisches Störfeld

$$M = \begin{pmatrix} M_{11}M_{12}M_{13} \\ M_{21}M_{22}M_{23} \\ M_{31}M_{32}M_{33} \end{pmatrix}$$

Matrix der weichmagnetischen Verzerrung

$\mathbf{b}_{Ej}$ =     Erdmagnetfeldvektor

$\varepsilon_j$ =     Zufallsvektor, der das Rauschen der Sensoren darstellt

$\langle \varepsilon_j \rangle = 0$ ; $\langle \varepsilon_j \varepsilon_j^T \rangle = \sigma_\mu^2 I_3$ ; $\langle \varepsilon_j \varepsilon_k^T \rangle = 0$ $j \neq k$;

$\langle\ \rangle$ = statistischer Erwartungswert

Die Komponenten des Erdmagnetfeldvektors $\mathbf{b}_{Ej}$ sind in den verschiedenen Stellungen des Magnetkompasses nicht bekannt. Es ist aber möglich, sie mit Hilfe der Neigungssensoren teilweise darzustellen. Die zwei Neigungssensoren messen dabei je eine Komponente des auf 1 normierten Vektors des Gravitationsfeldes. Dieser Vektor verläuft in Lotrichtung.

$\mathbf{b}_{Ej}$ =     $s\ \mathbf{g}_j + c\ _{\eta j}$

$s$ =     $\sin(i)$ ; $c = \cos(i)$

$|\ \mathbf{b}_{Ej}\ |$ =     1 Erdmagnetfeldstärke = 1

$i$ =     Inklinationswinkel des Erdmagnetfeldes

$\eta_j$ =     $\cos(\alpha_j)\mathbf{e}_j + \sin(\alpha_j)\mathbf{f}_j$ ;

wobei $\alpha_j$ der Azimutwinkel ist, d.h. der Drehwinkel des sensoreigenen Koordinatensystems gegenüber einem raumfesten Koordinatensystem in der Horizontalebene.

$\mathbf{g}_j$ =     Gravitationsvektor

$|\mathbf{g}_j|$ =     1

$$\mathbf{g}_j = \begin{pmatrix} g_{1j} \\ g_{2j} \\ g_{3j} \end{pmatrix} \ ; \ \mathbf{e}_j = (1-g_{1j}^2)^{-1/2} \begin{pmatrix} 1-g_{1j}^2 \\ -g_{1j}g_{2j} \\ -g_{1j}g_{3j} \end{pmatrix} \ ; \ \mathbf{f}_j = (1-g_{1j}^2)^{-1/2} \begin{pmatrix} 0 \\ -g_{3j} \\ g_{2j} \end{pmatrix}$$

$g_{1j}$, $g_{2j}$: Neigungssensormeßwerte, $g_{3j} = (1-g_{1j}^2 - g_{2j}^2)^{1/2}$

Die Werte der Parameter $M_{11}$ ... $M_{33}$, $\mu_{01}$, $\mu_{02}$, $\mu_{03}$, $\alpha_1$ ... $\alpha_N$ und $i$ lassen sich unter Verwendung einer an sich bekannten Optimierungsrechnung bestimmen, wobei z. B. das Minimum verlangt wird für die statistische Summe

$$L(M, \mu_0, \alpha_1 ... \alpha_N, i) = \sum_{j=1}^{N} (\mu_j - \mu_0 - Mb_{Ej})^2$$

Im Rahmen der Erfindung sind verschiedene andere Lösungsverfahren möglich, wie z. B. über Kalmanfilter, Fuzzy-Verfahren oder neuronale Netze.

So erkennt man, daß sich eine wesentliche mathematische Vereinfachung ergibt, wenn die Größe $\Delta\mathbf{M}$ = 0 ist. Das ist der Fall, wenn kein weichmagnetisches Störfeld zu berücksichtigen ist. $\mathbf{M}$ entspricht dann der Einheitsmatrix.

Vorstehend wurde in der Beschreibung auf Neigungssensoren Bezug genommen. Statt dieser lassen sich auch zwei orthogonal montierte Encoder verwenden. Mit diesen würden Winkel in bezug auf einen Bezugspunkt gemessen. Bei der praktischen Ausführung müßte dann jedoch eine festmontierte Halterung vorgesehen werden, zu der sich der Magnetkompaß und das störende System verdrehen würden.

Auch wäre es möglich, die erwünschten Neigungswinkel mittels zweier an dem System angebrachter Drehratensensoren, d.h. Gyros, zu bestimmen. Durch Integration der Drehrateninformationen lassen sich die Drehwinkel ableiten.

**Patentansprüche**

1. Verfahren zur Bestimmung der Richtung des Erdmagnetfeldes, das durch gerätefeste magnetische Materialien und Magnetfelder elektrischer Ströme gestört sein kann, mittels eines elektronischen Magnetkompasses, der drei Magnetfeldsensoren und zwei Neigungserfassungseinrichtungen enthält, wobei

   der elektronische Magnetkompaß in N verschiedenen räumlichen Stellungen angeordnet wird,

   in jeder dieser N Stellungen die Signale der Neigungserfassungseinrichtungen und die Signale der Magnetfeldsensoren gemessen und aus diesen Signalen Neigungswerte und Magnetfeldwerte bestimmt werden, und

   auf der Grundlage dieser Neigungswerte und Magnetfeldwerte die Größe des Erdmagnetfeldvektors berechnet wird mittels der vektoriellen Gleichung

   $$\text{const} = b_g = b_E \sin(i) = g^T b_E = g^T m (b_{gem} - b_0)$$

   mit

   | | |
   |---|---|
   | $b_g$ = | Magnetfeldkomponente parallel zum Gravitationsvektor $\mathbf{g}$ |
   | $b_E$ = | Länge des Magnetfeldvektors $\mathbf{b}_E$ |
   | $\mathbf{b}_{gem}$ = | gemessener Magnetfeldvektor |
   | $\mathbf{b}_E$ = | tatsächlicher Erdmagnetfeldvektor am Meßort |
   | $\Delta\mathbf{M}$ = | weichmagnetische Feldverzerrung, d.h. durch das Erdmagnetfeld induzierter Magnetismus |
   | $\mathbf{M}$ = | $\mathbf{I} + \Delta\mathbf{M}$        mit I = Einheitsmatrix |
   | $\mathbf{m}$ = | $\mathbf{M}^{-1}$ |
   | $\mathbf{b}_0$ = | hartmagnetischer Störfeldvektor |
   | $i$ = | Inklinationswinkel |

   wobei N mindestens gleich der Anzahl der zu bestimmenden Parameter der vektoriellen Gleichung sein muß.

2. Verfahren nach Anspruch 1, wobei eine der folgenden Maßstabsfestlegungen

   $b_g$ = const.; $m_{11}$ = const.; $m_{11} + m_{22} + m_{33}$ = const. ;
   $m_{11}^2 + m_{22}^2 + m_{33}^2$ = const.;
   $m_{11}^2 + m_{12}^2 + ... + m_{33}^2$ = const.; det $\mathbf{m}$ = const.; ausgewählt wird.

3. Verfahren nach Anspruch 1, wobei $\Delta\mathbf{M}$ = 0 gesetzt wird, wenn kein weichmagnetisches Störfeld zu berücksichtigen ist.

4. Verfahren nach Anspruch 1, wobei der Magnetfeldvektor mit Hilfe einer Optimierungsrechnung bestimmt wird, wenn die Anzahl N der Messungen in den verschiedenen Stellungen größer als die Anzahl der zur Verfügung stehenden Gleichungen ist.

5. Verfahren nach Anspruch 1, wobei die Größe des Erdmagnetfeldvektors auf der Grundlage der bestimmten Neigungswerte und Magnetfeldwerte unter zusätzlicher Verwendung der Gleichung

$$\text{const} = b_E{}^2 = b_E{}^T b_E = (b_{gem} - b_0)^T\, m^T m\, (b_{gem} - b_0)$$

| | |
|---|---|
| **b**$_{gem}$ = | gemessener Magnetfeldvektor |
| **b**$_E$ = | tatsächlicher Erdmagnetfeldvektor am Meßort |
| $\triangle$**M** = | weichmagnetische Feldverzerrung, d.h. durch das Erdmagnetfeld induzierter Magnetismus |
| **M** = | **I** + $\triangle$**M**     mit **I** = Einheitsmatrix |
| **m** = | **M**$^{-1}$ |
| **b**$_0$ = | hartmagnetischer Störfeldvektor |

mittels eines statistischen Optimierungsverfahrens bestimmt wird.

**6.** Verfahren nach einem der Ansprüche 1 bis 5, wobei als Neigungserfassungseinrichtungen Neigungssensoren verwendet werden.

**7.** Verfahren nach einem der Ansprüche 1 bis 5, wobei als Neigungserfassungseinrichtungen Drehratensensoren (Gyros) verwendet werden, wobei durch Integration der Drehrateninformationen Neigungswinkel abgeleitet werden.

**8.** Verfahren nach einem der Ansprüche 1 bis 5, wobei als Neigungserfassungseinrichtungen Encoder verwendet werden, mit denen Winkel in bezug auf einen Bezugspunkt gemessen werden.

**Claims**

**1.** Method for determining the direction of the Earth's magnetic field, which may be interfered with by magnetic materials built into equipment and by magnetic fields produced by electric currents, using an electronic magnetic compass which contains three magnetic field sensors and two devices for measuring inclination,

the electronic magnetic compass being arranged in N different spatial positions,
in each of these N positions, the signals of the devices for measuring inclination and the signals of the magnetic field sensors being measured and inclination values and magnetic field values being determined from these signals, and
on the basis of these inclination values and magnetic field values, the magnitude of the Earth's magnetic field vector being calculated using the vector equation

$$\text{const} = b_g = b_E \sin(i) = g^T b_E = g^T m\, (b_{mea} - b_0)$$

where

| | |
|---|---|
| $b_g$ = | magnetic field component parallel to the gravitation vector g |
| $b_E$ = | length of the magnetic field vector $b_E$ |
| $b_{mea}$ = | measured magnetic field vector |
| $b_E$ = | actual Earth's magnetic field vector at the measuring site |
| $\triangle$M = | magnetically soft field distortion, i.e. magnetism induced by the Earth's magnetic field |
| M = | I + $\triangle$M where I = unit matrix |
| m = | M$^{-1}$ |
| $b_0$ = | magnetically hard spurious field vector |
| i = | inclination angle |

N having to be at least equal to the number of parameters to be determined in the vector equation.

**2.** Method according to Claim 1, one of the following scale definitions

$$b_g = \text{const.};\ m_{11} = \text{const.};\ m_{11} + m_{22} + m_{23} = \text{const.};$$

$$m_{11}^2 + m_{22}^2 + m_{33}^2 = \text{const.;}$$
$$m_{11}^2 + m_{12}^2 + ... + m_{33}^2 = \text{const.; det } m = \text{const.;}$$

being selected.

3. Method according to Claim 1, $\triangle M = 0$ being set if no magnetically soft spurious field is to be taken into account.

4. Method according to Claim 1, the magnetic field vector being determined with the aid of an optimization calculation if the number N of measurements in the various positions is greater than the number of available equations.

5. Method according to Claim 1, the magnitude of the Earth's magnetic field vector being determined using a statistical optimization method on the basis of the determined inclination values and magnetic field values with additional use of the equation

$$\text{const} = b_E{}^2 = b_E{}^T b_E = (b_{mea} - b_0)^T m^T (b_{mea} - b_0)$$

$b_{mea} = $ measured magnetic field vector
$b_E = $ actual Earth's magnetic field vector at the measuring site
$\Delta M = $ magnetically soft field distortion, i.e. magnetism induced by the Earth's magnetic field
$M = $ $I + \Delta M$ where $I$ = unit matrix
$m = $ $M^{-1}$
$b_0 = $ magnetically hard spurious field vector.

6. Method according to any of Claims 1 to 5, inclination sensors being used as devices for measuring inclination.

7. Method according to any of Claims 1 to 5, rotational speed sensors (gyros) being used as devices for measuring inclination, and the inclination angle being derived by integrating the rotational speed information.

8. Method according to any of Claims 1 to 5, encoders with which angles are measured relative to a reference point being used as devices for measuring inclination.

**Revendications**

1. Procédé de détermination de la direction du champ magnétique terrestre, pouvant être perturbé par des matériaux magnétiques placés à demeure sur l'appareil et des champs magnétiques émanant de courants électriques, au moyen d'un compas magnétique électronique, contenant trois capteurs de champ magnétique et de dispositif de détection d'inclinaison, le compas magnétique électronique étant disposé en N positions spatiales différentes,

dans chacune de ces N positions les signaux émanant des dispositifs de détection d'inclinaison et les signaux émanant des capteurs de champ magnétique étant mesurés et des valeurs d'inclinaison et des valeurs de champ magnétique étant déterminées à partir de ces signaux, et

en se basant sur ces valeurs d'inclinaison et valeurs de champ magnétique, la grandeur du vecteur de champ magnétique terrestre étant calculée au moyen de l'équation vectorielle

$$\text{const} = b_g = b_E \sin(i) = g^T b_E = g^T m (b_{gem} - b_o)$$

avec

$b_g = $ composante du champ magnétique, orientée parallèlement au vecteur de gravitation **g**
$b_E = $ longueur du vecteur de champ magnétique **b**$_E$
**b**$_{gem} = $ vecteur de champ magnétique mesuré
**b**$_E = $ vecteur de champ magnétique terrestre effectif à l'emplacement de la mesure
$\square$**M** $= $ distorsion de champ magnétique doux, c'est-à-dire du fait du magnétisme induit par le champ magnétique terrestre

M =  **I + □M** avec I = matrice unitaire
m =  $M^{-1}$
$b_o$ =  Vecteur de champ parasite magnétique dur
i =  angle d'inclinaison

N devant être au moins égal au nombre des paramètres, à déterminer, de l'équation vectorielle.

**2.** Procédé selon la revendication 1, dans lequel on a sélectionné les échelles de mesure suivantes

  $b_g$ = const.; $m_{11}$ = const.; $m_{11} + m_{22} + m_{33}$ = cont.;
  $m_{11}^2 + m_{22}^2 + m_{33}^2$ = cont.;
  $m_{11}^2 + m_{12}^2 + ... \; m_{33}^2$ = cont.; det m = cont ..

**3.** Procédé selon la revendication 1, dans lequel □M = 0, si aucun parasite magnétiquement doux n'est à prendre en considération.

**4.** Procédé selon la revendication 1, dans lequel le vecteur de champ magnétique est déterminé à l'aide d'un calcul d'optimisation, si le nombre N des mesures dans les différentes positions est supérieur au nombre des équations fournies.

**5.** Procédé selon la revendication 1, la valeur du vecteur de champ magnétique terrestre étant déterminée sur la base des valeurs d'inclinaison et des valeurs de champ magnétique déterminées, avec utilisation supplémentaire de l'équation

$$const = b_E^{\;2} = b_E^{\;T} b_E = (b_{gem} - b_o)^T \; m^T m \; (b_{gem} - b_o)$$

**b**$_{gem}$ =  Vecteur de champ magnétique mesuré
**b**$_E$ =  Vecteur de champ magnétique terrestre effectif à l'emplacement de la mesure
□**M** =  Distorsion de champ magnétiquement doux, c'est-à-dire venant du magnétisme induit par le champ magnétique terrestre
M =  I + □M avec I = matrice unitaire
m =  $M^{-1}$
**b**$_o$ =  Vecteur de champ parasite magnétiquement dur

la détermination se faisant à l'aide d'un procédé d'optimisation de nature statistique.

**6.** Procédé selon l'une des revendications 1 à 5, des capteurs d'inclinaison étant utilisés à titre de dispositifs de détection de l'inclinaison.

**7.** Procédé selon l'une des revendications 1 à 5, des capteurs de vitesse de rotation (gyros) étant utilisés à titre de dispositifs de détection d'inclinaison, les angles d'inclinaison étant dérivés en procédant par intégration des informations de vitesse de rotation.

**8.** Procédé selon l'une des revendications 1 à 5, des codeurs, à l'aide desquels des angles sont mesurés en se référant à un point de référence, étant utilisés comme dispositifs de détection d'inclinaison.

# Fig.1

DMC     Magnetfeldsensoren

Gerät     Permanentmagnete

weichmagnetische
Materialien

# Fig.2

DMC-Zielrichtung

Magnetisch
Norden

α

i

Horizontalebene

g

b_E

Erdschwerefeld

Erdmagnetfeld